# EUROPEAN PATENT SPECIFICATION

(11) **EP 2 834 519 B1**
(45) Date of publication and mention of the grant of the patent: **18.05.2016**
(21) Application number: 12806694.1
(22) Date of filing: 23.11.2012
(51) Int. Cl.: F24J 2/00, F24J 2/07, F24J 2/48, F03G 6/06, F24J 2/10, F24J 2/16

(54) **DEVICE, SYSTEM AND METHOD FOR HIGH LEVEL OF ENERGETIC EFFICIENCY FOR THE STORAGE AND USE OF THERMAL ENERGY OF SOLAR ORIGIN**
VORRICHTUNG, SYSTEM UND VERFAHREN FÜR HOHE ENERGETISCHE EFFIZIENZ ZUR SPEICHERUNG UND VERWENDUNG VON SONNENWÄRMEENERGIE
DISPOSITIF, SYSTÈME ET PROCÉDÉ POUR HAUT NIVEAU DE RENDEMENT ÉNERGÉTIQUE POUR LE STOCKAGE ET L'UTILISATION D'ÉNERGIE THERMIQUE D'ORIGINE SOLAIRE

(30) Priority: 03.04.2012 IT RM20120135
(43) Date of publication of application: 11.02.2015
(73) Proprietor: Magaldi Industrie S.r.l., 84135 Salerno (IT)
(72) Inventor: MAGALDI, Mario, I-84134 Salerno (SA) (IT); DE MICHELE, Gennaro, I-56125 Pisa (PI) (IT); DONATINI, Franco, I-56122 Pisa (PI) (IT)
(74) Representative: Papa, Elisabetta
(86) International application number: PCT/IB2012/056678
(87) International publication number: WO 2013/150347

(56) References cited:
- WO-A2-2011/027309
- JP-A- 1 151 757
- US-A- 4 038 557
- US-A- 4 455 153

## Description

### Field of the Invention

The present invention refers to a plant for the production of energy based on the use and the storage of solar energy, to a related method and to a device for storage and transfer of thermal energy of solar origin suitable for use in such plant.

### Backaround of the Invention

The use of solar energy concentrated by heliostats is known in the art. It is also known the possibility of storing heat not immediately used, by devices based on fluidized particle beds exposed to solar radiation concentrated by heliostats.

Typically, the devices for storage of thermal energy of solar origin and/or the devices for corresponding heat exchange are located in a position elevated with respect to the installation plane of the field of heliostats, so as to receive from below the concentrated solar radiation. Therefore, the typical configuration provides a storage or exchange device placed on a tower structure, in which so-called "service" components can find accommodation, whereas the field of heliostats - based on mirrors - is installed on the ground.

The plants for the production of heat/electric energy of solar origin based on such devices can envisage one or more storage and/or exchange units, depending on the heat power that is to be obtained. With the increase in plant power, the weight of the device containing the storage means increases, the number of mirrors dedicated to each device increases, and accordingly the height at which the device itself has to be positioned to keep reasonable the extension of the field of mirrors increases, concomitantly ensuring that the solar radiation be suitably concentrated thereon. Typical industrial plants envisage very high values of the heights of the storage and/or exchange devices, heights reaching even over 100 m.

A further criticality present in known plant configurations is linked to the presence of apparatuses that, operating at high temperature, are made of valuable and costly materials and concomitantly cause reductions in overall plant efficiency due to the associated bigger heat dispersions

The known plant configurations Just described entail significant drawbacks, linked also to the difficulty and cost of maintenance operations at an altitude, requiring, among other things, major holsitng means.

Moreover, in case of devices with a bed of fluidizable particles, accidental breakage of the device itself can cause high-temperature material leaking and falling by gravity, with danger for persons and things.

As a consequence of what has just been noted, the known devices for storage and transfer of thermal energy of solar origin can have costs of electric energy production still high, and anyhow far from the so-called *"parity grid".*

WO 2011/027309, considered as the closest prior art, discloses a system for thermal energy storage by direct solar radiation. The system Is based upon a bed of solid particles in continuous and casual movement received inside a container. In one embodiments, healing of the particles by solar radiation is obtained in an indirect way, through Intermediation of a device, for example a heat pipe.

US 4,455,153 discloses a process for producing a gasified synthetic fuel. The heat-storage part of the process is performed by a molten gasification medium, in particular molten salts heated by solar radiation.

JP 1 151 757 discloses a Stirling engine having a heat exchanger. The latter is associated with a casing receiving a fluidized bed which is heated up by solar radiation.

### Summary of the Invention

The technical problem underlying the present invention is therefore to overcome the drawbacks mentioned above with reference to the known art.

The above-mentioned problem is solved by a device according to claim 1 and a method according to claim 33.

Preferred features of the invention are object of the dependent claims.

The invention provides a device for storage and transfer of thermal energy of solar origin based on a solid storage means consisting In a bed of fluidizable particles.

Said device allows high production efficiencies, low costs of investment and maintenance and high operation safety. This is attained thanks to the constructive simplicity of the device itself, to the possibility of positioning it on the ground, providing a solar irradiation from above.

The device of the invention is contrived for a positioning on the ground, and Irradiation from above can be carried out by reflection optical systems, for instance according to a so-called "beam down" configuration explained hereinafter, or by mere positioning of a mirror or equivalent means at an altitude, e.g. on natural slopes or on dedicated elevated structures.

According to a preferred plant configuration, the above-mentioned high production efficiencies and low costs are obtained also by a construction specialization of the device for storage and transfer into two or more so-called "thermal categories", each associated with specific temperatures and running conditions.

Devices with a different thermal category can then be effectively connected in series among them in a same plant. In said context, the device of the invention is suitable to be inserted as base module in plants for electric and/or thermal energy production, preferably servicing heat consumptions such as, for instance, advantageously salt removing systems.

The construction specialization of the devices into thermal categories allows remarkable advantages in terms of efficiency increase and cost reduction, above all when these devices are inserted in high-power electric energy production plants.

The advantages related to the specialization of the invention devices and the connection modes among them when inserted in high-power plants are described hereinafter.

The device of the invention comprises the above-mentioned fluidizable bed of particles confined within a casing that insulates it from the external environment. The casing is preferably metallic and thermally insulated at its own external surfaces. Said casing defines one or more cavities which extend through the bed of particles and receive concentrated solar radiation coming from above. The walls of the cavity(ies) are preferably made and/or coated of metal and/or of ceramic material and are not thermally insulated. Preferably, the cavity(ies) have a cylindrical or substantially cylindrical geometry.

The above-mentioned arrangement and configuration of each receiving cavity allow to maximize the absorption of solar radiation and therefore the overall efficiency of the plant which uses the device of the invention.

The above-mentioned fluidizable bed of particles can carry out the dual function of storing heat transferred from the walls of the receiving cavity and transferring such heat to further heat exchanging elements, the latter in particular pipe bundles immersed in the bed of particles or anyhow touched by said bed.

Said storing and transferring steps can also be activated selectively and the one independently of the other. This is advantageously obtained by a controlled fluidization of selected portions of the bed of particles.

In particular, in a preferred embodiment the device provides two independently fluidizable zones or portions of bed, and specifically a first portion of bed in contact with the receiving cavity and assigned to storage of thermal energy, and a second portion of bed, adjacent to the first one, in which is immersed a heat exchange pipe bundle (or an equivalent means) crossed by a working fluid, preferably water.

Heat exchange between the receiving cavity and the storage bed occurs by fluidizing said first portion of bed, whereas the second portion of bed assigned to heat transfer can be fluidized only in an operating condition of energy production of the plant or the apparatus in which the device is inserted. Preferably, the first portion section nearer to the wall of the cavity is fluidized with a greater fluidization speed with respect to the remaining first portion, as better described hereinafter.

In a preferred configuration, the optical system enabling to direct the solar radiation in a cavity is comprised of a field of heliostats which concentrates the radiation on a secondary reflector, which in turn concentrates such radiation in the receiving cavities of the fluidized bed device. Preferably, the secondary reflector is arranged on a tower, or anyhow on an elevated structure, whereas the device for storage and transfer is arranged (as mentioned) on the ground, preferably in a position centered with respect to the secondary reflector.

In another equally preferred configuration, the heliostats can be arranged on a natural or artificial slope and concentrate the solar radiation in one or more cavities suitably arranged in the bed of particles.

Therefore, the concentrated solar radiation is incident from above on the or each cavity internal to the fluidized bed, and is preferably concentrated in a central region of said cavity.

As said above, the or each receiving cavity crosses the fluidizable bed. The bottom end of the cavity can coincide with the base of said bed, whereas the top end can define a top portion of the casing which receives the bed of particles. The walls of the cavity therefore confine the bed with respect to the external environment, preventing direct contacts between bed and environment.

As said above, preferably the cavity has a cylindrical geometry. Even more preferably, it has a diameter/height ratio comprised in a range of 0.2-0.5. Such a ratio ensures, as it will be illustrated in greater detail hereinafter, a high absorption of solar radiation and therefore a lower loss by reflection. In particular, the proposed range of proportions causes the radiation incident on the side wall of the cavity to be absorbed after plural partial reflections along the longitudinal extension of the cavity itself through the bed of particles, reducing to a minimum the losses to the outside.

In a further preferred configuration, corresponding to production plants of high thermal power, the fluidized bed device of the invention can have further pipe bundles - or equivalent heat exchanging means - directly exposed to the incident radiation. Preferably, said further heat exchanging means is arranged on the top of the casing which receives the bed of particles. In particular, said further heat exchanging means exposed to the solar radiation can be positioned (also) surrounding the inlet of the cavity.

In a preferred configuration providing the above-mentioned secondary reflector, on the heat exchanging means is incident the solar radiation coming from heliostats farther from the fluidized bed device, typically associated with reduced heat flows, compatible with the thermal resistance features of pipe bundles. In the receiving cavity of the device is instead conveyed the high heat flow solar radiation coming from heliostats nearer to the secondary reflector. Such a different extent of heat flow associated with the spatial location of the heliostats is due to the Gaussian distribution of solar radiation, causing the center of the cavity to receive much higher heat flows, resulting from the overlapping of the so-called "footprints" of all heliostats.

As better illustrated hereinafter, the above-mentioned pipe bundles or other heat exchanging means exposed to the solar radiation can form a single operating circuit with the other heat exchanging elements in contact with the bed of particles, or define a circuit independent, or apt to be made selectively independent of said bed The configuration just considered, based on heat exchanging elements directly exposed to the solar radiation and on heat exchanging elements in contact with the bed of particles, is optimized in terms of plant efficiency as it allows to exploit all the available heat flow, concomitantly keeping the diameter of the cylindrical cavity reduced so as to minimize heat losses by re-irradiation to the external environment. The working temperatures of the heat exchanging elements exposed to direct radiation can in fact be such as to cause negligible losses due to irradiation.

In case the working fluid crossing the heat exchanging elements is water, a preferred process configuration envisages that during daytime the exposed exchanging elements receive the solar radiation and transfer it directly to the working fluid, making the related thermal energy immediately available for producing electric energy through a turbine and/or for producing desalinated water. Concomitantly, the cavity(ies) receives the concentrated radiation and the related thermal energy is stored in the bed of particles. Overnight, or due to a prolonged absence of the sun, thermal energy stored in the bed of particles can be transferred to the working fluid crossing the heat exchanging elements internal to the casing and said thermal energy can be used for continuing the production of electric energy and/or the production of desalinated water. Optionally, during sunshine hours part of the energy stored in the bed of particles can be transferred to the working fluid of the heat exchanging elements internal to the casing and cooperate in the production of electric energy and/or desalinated water.

The polygenerative-type configuration described hereto, i.e. a configuration providing possible production of electric energy (by associating the device to a turbine) and, for instance, of fresh water (by associating the device to a salt-removing system), allows to maximize the efficiency, meant as exploitation of available solar radiation.

Said polygenerative configuration can be realized even in the absence of heat exchanging elements directly exposed to solar radiation.

The choice of the optimal operating configuration between the polygenerative one and the monogenerative one depends on the size of the plant based on the invention device and on the needs of the installation zone. Due to plant efficiency reasons, for small-sized plants the sole production of desalinated water is preferable - as said, also in the absence of exposed exchanging elements - whereas polygeneration is advantageous for medium- and high-power plants.

Again, for generation plants based on the invention device which operate at low temperatures of the working fluid - or anyhow in case of small-sized plants - is advantageous the association thereof to ORC (*Organic Rankine Cycle*) cycles, i.e.

Rankine cycles with organic fluid, the latter constituting in said cases the working fluid of the invention device. The association with organic cycles is particularly advantageous for small-power plants, where traditional steam cycles would be more costly.

The device of the invention can therefore be used both as module of a plant of any size and for so-called "stand-alone" applications for the above-mentioned salt-removing operations or to the service of small heat consumptions, to which it can confer high efficiency.

In case of high powers produced, the device of the invention is particularly suitable to be inserted in hybrid plants in which electric energy generation is put together with steam production for heat consumptions such as, e.g., salt-removing systems, air conditioning systems, etc.

In a preferred configuration, it is also provided the use of fuel inside the fluidized bed, to make up for prolonged absences of insolation and/or ensure the reaching of a determined thermal level. This enables to drastically improve the flexibility and the overall efficiency of the system.

In another equally preferred configuration a cavity closure component is provided, activatable in the presence of bad weather and/or in the temporary or prolonged absence of insolation, so as to avoid heat dispersions from the device to the external environment.

As said above, in a preferred configuration of electric energy production plant the device for storage and transfer can be specialized in two typologies. In particular, a first typology is provided, which will be referred to as low-temperature Solar Generation Unit, UGS-L, intended for production of dry saturated steam from feed water as working fluid. Moreover, a second typology is envisaged, which will be referred to as high-temperature Solar Generation Unit, UGS-H, intended for superheating and, optionally, re-superheating of the steam produced by the UGS-L.

In general, in connection with the function carried out, the UGS-L device operates at temperatures sensibly lower than the UGS-H.

Moreover, as mentioned above, units with a different specialization are connected in series.

The above-introduced UGSs retain the hereto-mentioned features of the invention device and entail advantages related to the sensible decrease of heat losses by convection and irradiation to the external environment through the receiving cavity(ies) of the UGS-L, with an increase of the overall efficiency of the device and of the plant.

Moreover, the abatement of costs for UGS-L construction materials and for the manufacturing contrivances associated thereto represents a further overall advantage of the plant comprising them. In fact, in a thermodynamic cycle the energy share related to saturated steam production, and therefore the modules share part consisting of UGS-Ls, is of about the 60%; therefore, the cited advantages apply to the 60% of the generation plant, with entailed cost reductions and efficiency increases of the plant itself.

Other advantages, features and the operation steps of the present invention will be made apparent in the following detailed description of some embodiments thereof, given by way of example and not for limitative purposes.

### Brief description of the figures

Reference will be made to the figures of the annexed drawings, wherein:
- Figure 1 shows a schematic representation of a first embodiment of a plant in a "beam down" configuration comprising a device for storage and transfer of thermal energy of solar origin according to a preferred embodiment of the invention;
- Figure 1A shows a magnified view of part of the plant of Figure 1;
- Figure 1B shows a plant analogous to that of Figure 1, with a different arrangement of heliostats by irradiation of the device from above;
- Figures 2A and 2B refer to results of numerical simulations illustrating, respectively, the solar footprint generated on a plane at the inlet of a cylindrical cavity of the device of Figures 1 and 1 B and the distribution of solar flow depending on the distance from the center of said cavity;
- Figure 3 shows a schematic representation of a second embodiment of a plant comprising a device for storage and transfer of thermal energy of solar origin according to another preferred embodiment of the invention;
- Figure 3A shows a magnified view of part of the plant of Figure 3;
- Figure 4 shows a schematic representation of a variant embodiment of the plant of Figure 3;
- Figure 5 shows a schematic representation of another variant embodiment of the plant of Figure 3;
- Figure 5A shows a magnified view of part of the plant of Figure 5;
- Figure 6 shows a schematic representation of a variant embodiment of the device for storage and transfer of thermal energy of solar origin according to the invention;
- Figure 7 shows a general connection diagram among specialized UGS devices, applicable in one of the plants of the preceding figures; and
- Figure 8 shows a diagram of an electric energy production plant based on the specialized UGS devices of Figure 6.

### Detailed description of preferred embodiments of the invention

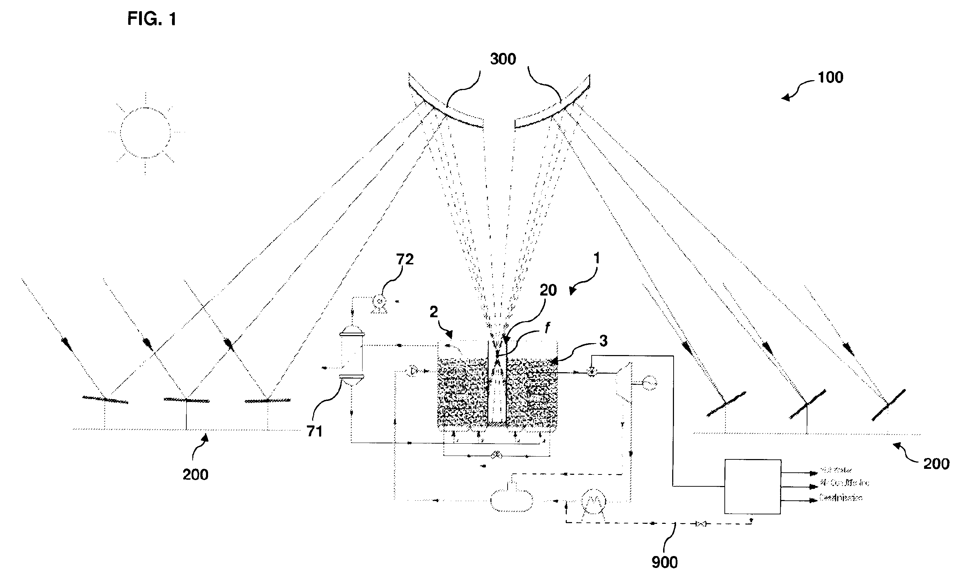

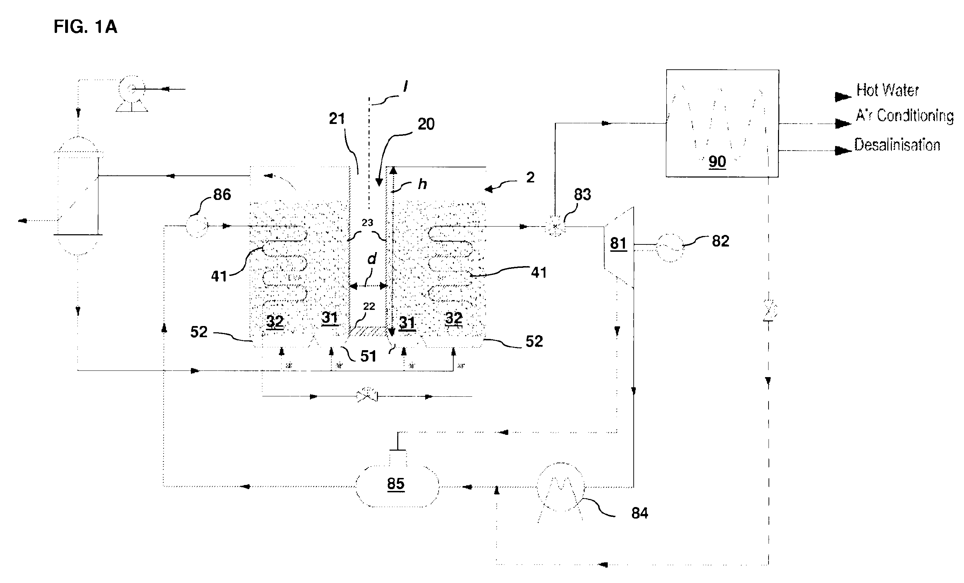

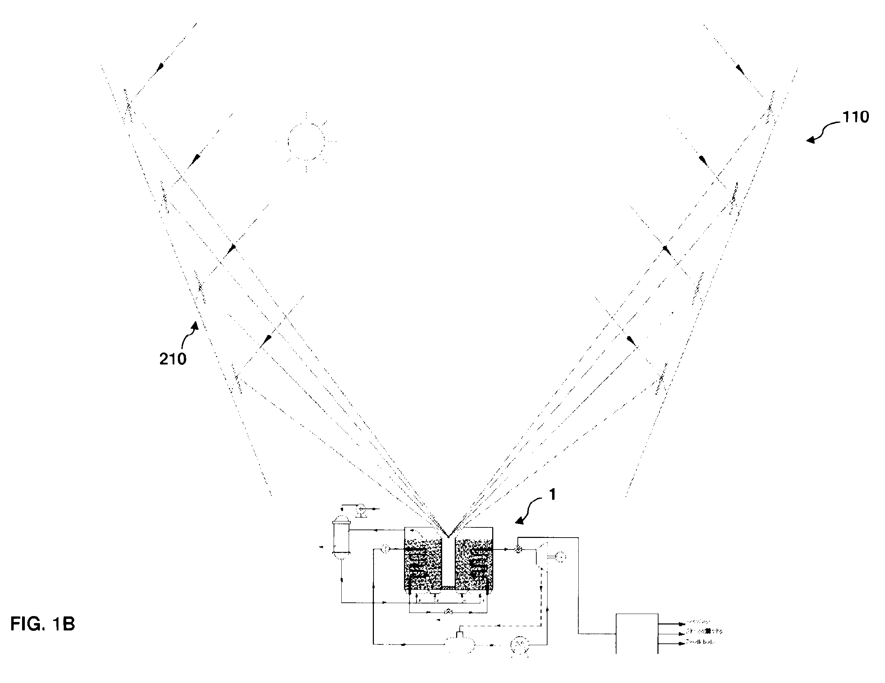

Referring initially to Figure 1 and 1A, a solar plant for the production of energy, based on a "beam down" configuration, is generally denoted by 100. The plant 100 of the present embodiment is suitable for producing steam and steam for industrial uses.

The plant 100 comprises a device for storage and transfer of thermal energy associated with an incident solar radiation according to a preferred embodiment of the invention, device which is generally denoted by 1. The plant 100 may comprise more than one device of the above-mentioned type.

The plant 100 also comprises solar radiation captation means which defines, jointly to the device 1, the above-mentioned "beam down" irradiation configuration. In particular, the plant 100 comprises primary captation means, in the present example a field 200 of heliostats, directly concerned by the solar radiation and apt to convey the latter on secondary captation means 300, preferably a reflector or mirror, apt to receive the solar radiation from the primary means 200 and, in turn, convey it at a receiving cavity 20 of the device 1.

In the present arrangement, the secondary reflector 300 is located on a tower or other elevated structure, whereas the field 200 of heliostats and the device 1 are arranged on the ground. Preferably, the device 1 is in a position centered with respect to the secondary reflector 300.

The device 1 comprises a containment casing 2, which has a receiving cavity 20 for receiving the solar radiation concentrated by the captation means and which accommodates thereinside a bed 3 of fluidizable particles.

Variant embodiments may provide more than one receiving cavity obtained in the casing 2.

The containment casing 2 is thermally insulated so as to reduce to a minimum the dispersion of heat into the external environment, and is preferably made of metal.

According to the invention, the receiving cavity 20 extends through the bed 3 of particles and preferably for the entire height of the containment casing 2.

In the present example, the receiving cavity 20 has a substantially elongated, and in particular substantially cylindrical geometry, extending along a longitudinal axis / which is arranged, in use, preferably vertical.

The cavity 20 is defined by a first open longitudinal end, or inlet, 21, by a second longitudinal end 22, preferably closed by a bottom, and by a side skirt 23 interposed between inlet 21 and bottom 22 and apt to receive the concentrated solar radiation and to transfer thermal energy associated thereto to the bed 3 of particles.

In the present example, the inlet 21 of the cavity 20 is defined by substantially plane and substantially right-angle surfaces.

Preferably, the cavity 20 has a diameter d and a height h in a ratio comprised in a range of about 0.2-0.5. Said ratio is suitable to maximize the absorption of the concentrated solar radiation. In particular, the lower the value of said ratio, the better the efficiency of absorption of the solar radiation incident on the walls of the top part of the skirt 23. Said incident radiation is absorbed through said skirt 23 after multiple partial reflections towards the bottom 22 of the cavity 20.

Preferably, the side skirt 23 of the cavity 20 is comprised of material absorbing the solar radiation, whereas the bottom 22 is of a material reflecting the solar radiation, so that the bottom 22 reflect precisely again towards the side skirt 23 any radiation impinging thereon, and this to the ends of a high absorption of the incident radiation.

The side skirt 23 may provide an external surface made of, or coated by, a metallic and/or ceramic material. The internal surface of the skirt 23 in contact with the bed 3 of particles may provide an antiwear coating.

As said above, the receiving cavity 20 extends through the bed 3 of particles and is separated from the latter by its own side skirt 23. The bed 3 of particles is therefore arranged circumscribed to - and in contact with the internal surface of - said side skirt 23.

Preferably, the bottom 22 of the cavity 20 is arranged substantially at or in the proximity of the bottom of the casing 2 defining the base of the bed of particles 3.

Preferably, the overall configuration is such that the solar radiation be conveyed within the cavity 20 at a central portion of the cavity itself and at the height of the exposed surface of the bed 3 of particles. In other words, a preferred configuration for aiming the optical system is such as to position the secondary focus f, i.e. the point of convergence of the rays reflected by the secondary reflector 300, at the center of the top inlet 21 of the cavity 20, at a height equal to that of the bed of particles.

The bed 3 of particles is apt to be selectively moved by a fluidization gas, preferably air, for storing thermal energy received from the solar radiation through the side skirt 23 of the cavity 20. The fluidization of the bed 3 of particles ensures precisely an effective and uniform heat exchange with the side skirt 23 of the cavity 20.

The choice of particle material for bed 3 of particles is based in particular on the poor aptitude for abrasion and fragmentation, in response to the need to minimize the phenomenon of bed particles elutration so as to limit the production and transportation of fines in the fluidization air. Based on these considerations, a preferred configuration favors the use, for bed particles, of granular material inert to oxidation, like e.g. silicon carbide or quartz, with a regular shape, preferably spherical and/or preferably having the size of the order of 50 to 500 microns, and such that said size be preferably native, that is not resulting from the aggregation of smaller particles.

On the basis of the present embodiment, the bed 3 of particles is effectively formed by a first storage portion 31 and a second transfer portion 32, the latter preferably circumscribed to, and in contact with, the storage portion 31.

In particular, the storage portion 31 is apt to store thermal energy received from the solar radiation through the side skirt 23 of the cavity 20, and is therefore arranged at the latter. The transfer portion 32 is arranged adjacently to the storage portion 31, peripherally with respect to the cavity 20, and is apt to transfer thermal energy stored in the bed portion 31 to heat exchanging elements 41 received within the casing 2 and that will be described hereinafter.

Preferably, in use the storage portion 31 and the transfer portion 32 are selectively and independently fluidizable to realize a step of storing thermal energy and a step of transferring said stored energy, respectively. In particular, heat transfer to the heat exchanging elements 41 can be stopped by ceasing fluidization of the exchange portion 32.

According to operation modes typical of the plant 100, the step of storing by means of the bed portion 31 is activated in the daytime and in the presence of solar irradiation, and the step of transferring, by activation also of the bed portion 32, both in the daytime and in the nighttime.

The fluidization gas is fed within the casing 2 to the bed portions 31 and 32 by respective feeding inlets 51 and 52 of air box type, known per se and schematically represented in the figures.

At such inlets 51 and 52 it is preferably provided a distribution septum or other distributor of fluidization gas, apt to enable a uniform entry of the latter and concomitantly ensure a support for the bed 3 of particles, contributing to realize the bottom of the casing 2.

The storage 31 and exchange 32 portions can be continuous or separated by septums not depicted in the figures. In a preferred variant embodiment, the two bed portions 31 and 32 may constitute adjacent portions of a same bed, selectively fluidizable by separation of the air boxes.

Preferably, it is provided means apt to selectively vary the fluidization gas speed and/or flow rate for adjusting the extent of heat exchange and transfer. In particular, by changing the crossing speed of the fluidization gas it is possible to control and modify the overall thermal exchange coefficient between the fluidized bed and the exchange surface, with consequent flexibility in the adjustment of the amount of thermal power transferred.

In the present embodiment, it is also provided a heat exchanger gas/gas 71, in particular air/air, in communication with the fluidization gas circuit. In particular, in use, in said exchanger 71 are fed a first cold gas, which is the fluidization gas to be used for fluidization of the bed 3 of particles, and a second hot gas, which is the fluidization gas outlet from the bed 3 of particles. Therefore, the exchanger 71 allows a pre-heating of the fluidization air, recovering part of the heat of the fluidization air being outlet.

The fluidization gas circuit typically comprises also a fan or compressor 72, or an equivalent means for collecting environment air.

Said circuit is typically balanced by an aspirator, not illustrated and placed downstream of the exchanger 71, on the line of the hot fluidization air coming from the device 1.

As said above, within the casing 2 heat exchanging elements 41 are provided, in particular pipe bundles, crossed, in use, by a working fluid, in the present example water/steam.

The pipe bundles 41 are immersed in the second portion 32 of bed, or anyhow arranged so as to be touched thereby when fluidized, i.e. during said step of transferring of thermal energy.

The pipe bundles 41 are part of a heat exchanging circuit suitable for producing steam to be expanded in a turbine 81 of the plant 100. In particular, as said, the working fluid is preferably water in a liquid state which receives during the crossing of the pipe bundles 41 thermal energy to become superheated steam. Said superheated steam, in pre-determined conditions of temperature and pressure, is then utilized to produce electric energy by expanding in the steam turbine 81 associated with an electric energy generator 82.

The working fluid circuit includes also, according to a configuration known per se, a condenser 84, a getter 85 with a bleed in turbine 81 and a supply pump 86, or means equivalent to those just mentioned.

In the present example it is provided that part of or all the superheated steam exiting the exchanging elements 41 may be sent to one or more heat consumptions 90 connected to the plant 100, for instance salt-removing systems, industrial systems, conditioning systems, etc. In case of such polygeneration, steam feeding can be obtained by flow adjusting means 83 arranged upstream of the turbine 81.

The working fluid circuit provides also the recovery of fluid sent to the heat consumptions 90, exhausted precisely of its heat contribution, by a connection 900 to the base circuit, preferably downstream of the condenser 84.

In a different configuration, the association of the device 1 with the heat consumptions 90 may be provided as an alternative to electric energy production, i.e. without electric power production in the plant.

It will be understood that both the fluidization gas circuit and the working fluid circuit can provide flow adjusting and/or interdicting means, of a type known per se, to meet specific operating needs.

The plant 100 and the device 1 can also provide means for feeding a fuel to be burned within the bed 3 of particles or within part thereof, and this to make up for prolonged absences of insolation and/or for ensuring the reaching of a determined power level depending on the needs downstream of the production plant .

In this case the device 1 is such as to provide independent inlets of fuel, preferably gaseous, to the bed of particles, one or more torches inserted into the environment of the device 1 for the trigger of combustion and to ensure the system from any dangerous accumulation of fuel inside the device, and one or more rupture discs on the casing 2. These expedients - like others that may be applicable - are aimed at preventing the risk of explosion. As to the burning of fuel per se, this is known technique and it will not be described further in the following. An important advantage derives from the possibility of burning said fuel directly inside the fluidizable bed. Usually, in fact, for devices of prior art this operation is carried out in production units separated from the main manufacturing plant.

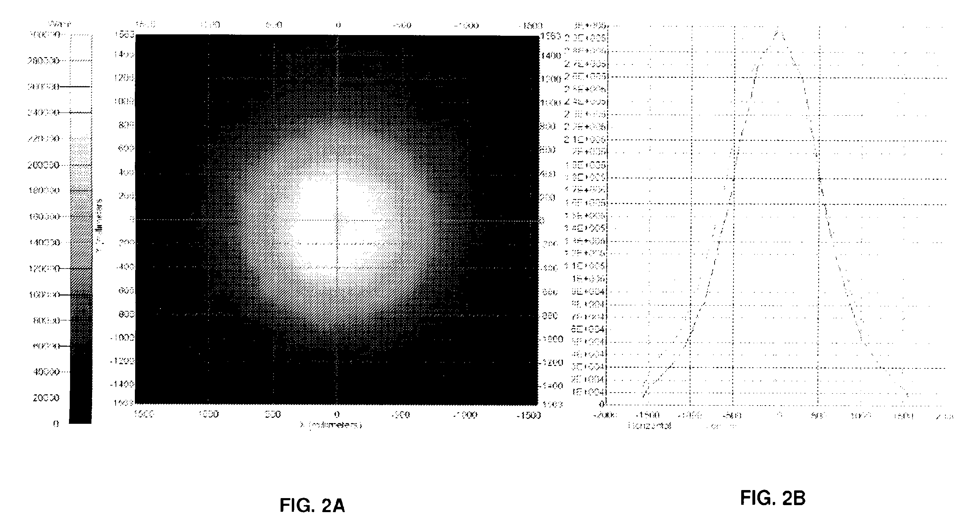

Figures 2A and 2B show, by way of example, the results of a numerical simulation for a typical distribution of concentrated solar radiation from above.

In particular, Figure 2A highlights the heat flows in a system of Cartesian axes whose center coincides with the center of the top cross section of the cylindrical cavity 20. The foot print generated from solar radiation highlights that the maximum flow is found at the center of said section, since it is the resultant of all footprints deriving from heliostats. Moving away from the center the flow value decreases rapidly, as is inferred also from Figure 2B.

The result of these numerical simulations is useful to the sizing of the diameter of the cylindrical cavity for a determined reference field of heliostats and to the prediction of the amount of energy that can be absorbed by the cavity itself.

Figures 1 B and 3 to 5A refer to further embodiments and variants of the device and of the plant of the invention. These further embodiments and variants will be described hereinafter only with reference to the differences with respect to what has already been disclosed in connection with Figures 1 and 1A.

In the variant of Figure 1 B, a plant of the same type of that in Figure 1 is provided, here globally denoted by 110, realizing an irradiation configuration from above alternative to the so-called "beam down" one. The plant 110 provides an optical system based on elevated primary captation means 210, directly concerned by the solar radiation and arranged precisely in a position elevated with respect to the device 1. In particular, the elevated primary captation means 210 is arranged on natural slopes and/or on suitable support structures.

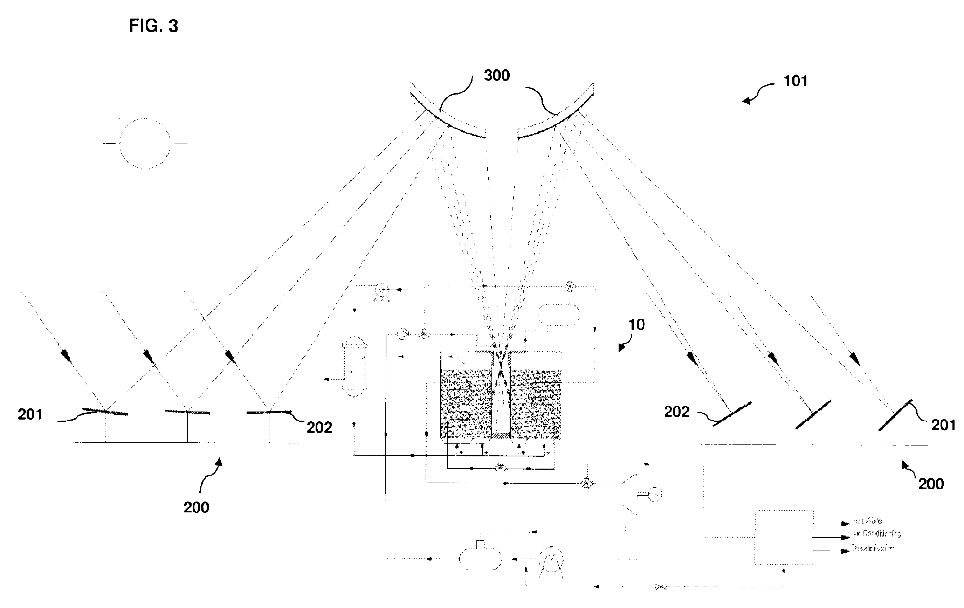

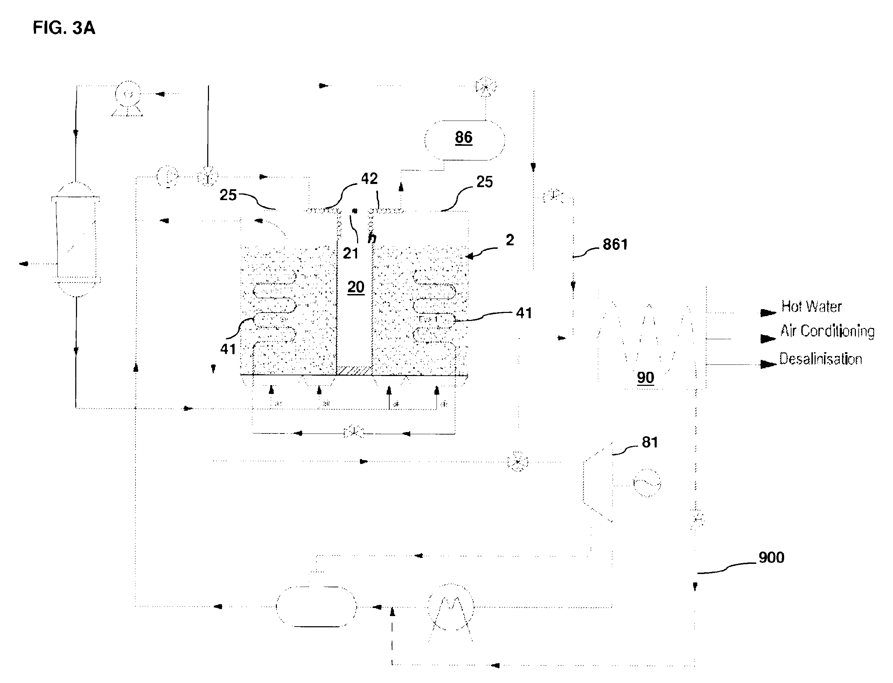

The embodiments and variants of Figures 3 to 5A are particularly suitable to the case of high thermal powers required and are compatible with both irradiation configurations of Figures 1 and 1B.

In particular, the embodiments and variants of Figures 3 to 5A share the provision of heat exchanging elements additional with respect to the first embodiment, which additional elements are directly exposed to incident solar radiation. Thus, solar heat flow external to the receiving cavity is recovered, preventing efficiency losses which might occur in solutions providing an increase in the transversal dimension of the receiving cavity just to attain high powers by captating all the radiation.

Figures 3 and 3A show a second embodiment of a plant, denoted herein by 101, similar to that of the first embodiment.

In that case, the plant 101 comprises a device for storage and transfer of thermal energy of solar origin, generally denoted by 10.

The device 10 provides further heat exchanging elements, in particular in this case as well pipe bundles 42, crossed, in use, by a working fluid and arranged externally to the casing 2 so as to be directly concerned by incident solar radiation. In particular, such further pipe bundles 42 are located on the top 25 of the casing 2, at the inlet 21 of the cavity 20 and/or to partially cover said inlet.

The pipe bundles 42 are part of a further heat exchanging circuit arranged completely outside of the casing 2, and that can be added to the circuit concerning the pipe bundles 41 of which at the first embodiment.

On the exposed pipe bundles 42 is incident the solar radiation coming from the mirrors 201 of the field 200 of heliostats farther from the secondary reflector 300, associated with reduced heat flows. The cylindrical cavity 20 receives instead the high-heat flow solar radiation of the mirrors 202 of the field 200 of heliostats nearer to the secondary reflector 300.

In the present example, said two circuits are in communication. In particular, it is provided that the working fluid crosses in sequence the exposed pipe bundles 42 and then those immersed in the second portion 32 of the bed of particles. In particular, the working fluid, in the example liquid water, runs across the exposed pipe bundles 42 increasing in temperature without phase transit, to then be inlet in the pipe bundles 41 internal to the fluid bed 3, here continuing heating to phase transit in saturated steam and subsequent superheating. The latter is then inlet in turbine 81 according to what already described with reference to the first embodiment.

The global circuit of the working fluid can also provide a storage tank 86, sized so as to allow to store temperature water, coming from the exposed pipe bundles 42, without sending it to heat exchanging elements 41 immersed in the bed of particles. This allows to meet specific operating needs of suspension in energy production, i.e. of heat exchange with the bed portion 32. In more detail, for plant needs it may be necessary to stop steam production; in case this need manifests itself during sunshine hours the presence of the storage tank 86 enables to recover the solar radiation incident on the exposed pipe bundles 42, storing therein water heated by said radiation, and to continue storing thermal energy in the storage bed 31 through the cylindrical cavity 20. In these conditions the bed portion 32 in charge of the exchange is not fluidized. When the "production stop" event is over, it is possible to open the connection circuit for connecting with the pipe bundles 41 internal to the device 10 and continue production.

Alternatively or in conjunction with hot water storage in the tank 86, or anyhow in an ordinary operation mode, the energy absorbed by the exposed bundles 42 can be utilized, by sending it via a bypass circuit 861 directly to the heat consumption(s) 90 optionally available.

A further process configuration provides that the thermal energy absorbed by the exposed pipe bundles 42 may be utilized exclusively for supplying the heat consumptions 90 by the bypass circuit 861, whereas the remaining solar radiation continues to be absorbed by the cylindrical cavity 20, stored by the storage bed portion 31 and transferred, concomitantly or in the absence of sun, to the pipe bundles 41 for the production of steam apt to be sent in turbine 81.

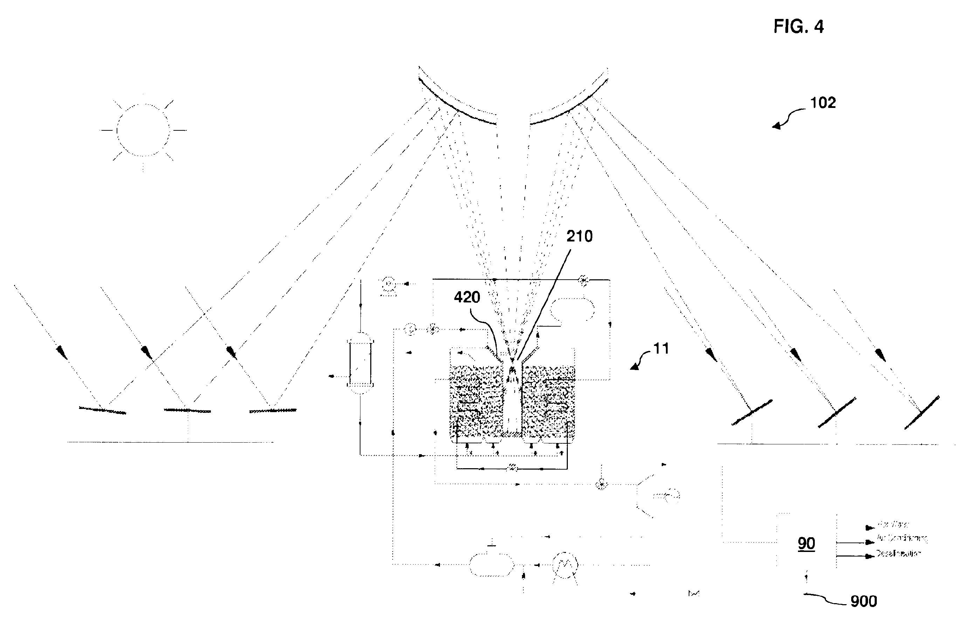

Referring now to the embodiment of Figure 4, in this case it is provided a device for storage and transfer of thermal energy of solar origin, herein globally denoted by 11, inserted in a plant denoted by 102.

The device 11 provides an inlet 210 of the cylindrical cavity 20 defined by a frustoconical surface. At said inlet 210, to follow its profile, further heat exchanging elements are arranged, exposed to solar radiation, herein denoted by 420.

Otherwise, the plant 102 and the device 11 are analogous to those already described with reference to Figures 3 and 3A.

As already said, also in the case of the plant 101 and 102 of Figures, respectively 3 and 4, a further preferred configuration, not illustrated, may provide an association exclusively with a heat consumption, e.g. a salt-removing system, without production of electric energy.

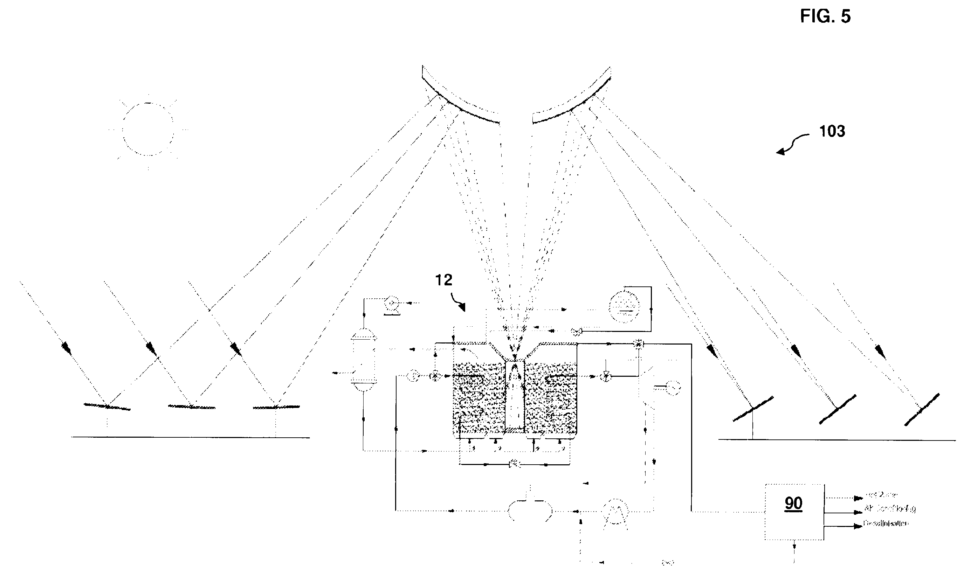

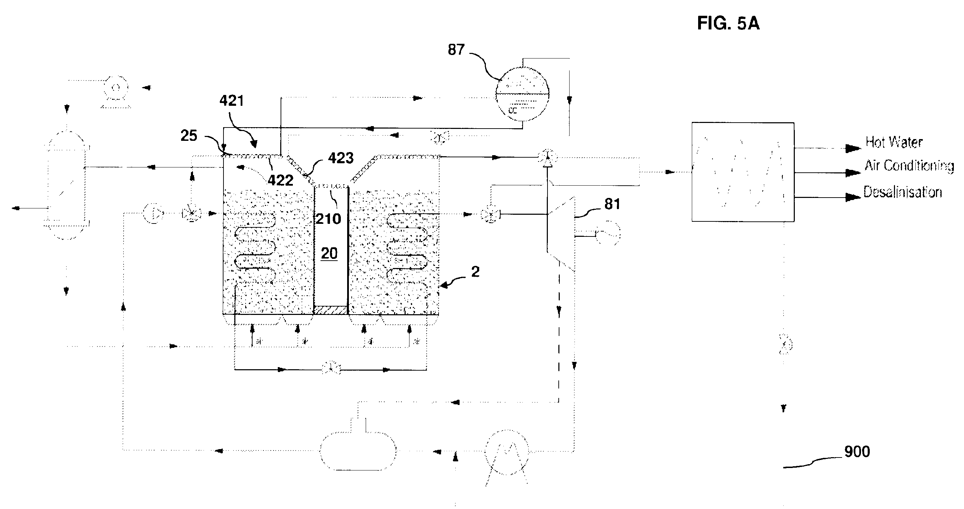

Referring to the embodiment of Figures 5 and 5A, in this case it is provided a device for storage and transfer of thermal energy of solar origin, globally denoted by 12, inserted in a plant denoted by 103.

In the device 12 there are provided exposed heat exchanging elements, globally denoted by 421, of surface as a whole greater than the instances of Figures 3 and 4. Such heat exchanging elements 421 are precisely sized so as to absorb a greater solar heat flow, such as to bring about the heating, the evaporation and the superheating of the overheating of the working fluid and therefore, alternatively or in conjunction, the direct inletting of steam in turbine 81 and/or its use in one or more heat consumptions 90.

This configuration with a greater extension of the exposed pipe exchanger 421 is particularly convenient for plants of higher power, as in that case, due to the greater size of the field 200 of heliostats and the distance from the device 12, the footprint of the solar radiation thereon increases. A greater extension of the exposed pipe exchanger allows therefore to intercept all the available incident radiation, avoiding to increase the diameter of the cavity 20 with entailed losses by re-irradiation to the environment.

In the present example, the heat exchanging elements 421 extend both on the top 25 of the casing 2 and at the inlet 210, e.g. frustoconical, of the cavity 20.

Water in the liquid state is then supplied by the already cited pump 86, and can follow two circuits, the first one relative to the external exchanging elements 421 and the second one relative to the internal exchanging elements 41 immersed in the bed of particles.

In the configuration considered herein, to the exposed heat exchanging elements 421 it is associated a circuit partitioned into different sectors, connectible thereamong, to allow the above-mentioned preheating, evaporation and overheating of the working fluid. In particular, exposed heat exchanging elements 422 are provided, arranged peripherally to the cavity 20 and suitable to produce a pre-heating of the working fluid, and further exposed heat exchanging elements 423, arranged in proximity of or at the inlet 210 of the cavity 20, in series with respect to the elements 422 and suitable to produce an evaporation and overheating of the working fluid.

It is preferably provided a cylindrical body 87 which connects the heat exchanging elements 422 and 423 and enables to separate the liquid phase from the gaseous one and to operate as steam storage means in case of a momentary absence of insolation.

A preferred process configuration provides, during daytime irradiation hours, the production of superheated steam by the sole exposed tube exchangers 421 and, concomitantly the storage of thermal energy in the storage bed portion 31. During nighttime and/or for prolonged absence of the sun, energy stored in the bed 31 is utilized to produce superheated steam, and this by fluidization of the exchange bed portion 32 and the exchange means 41.

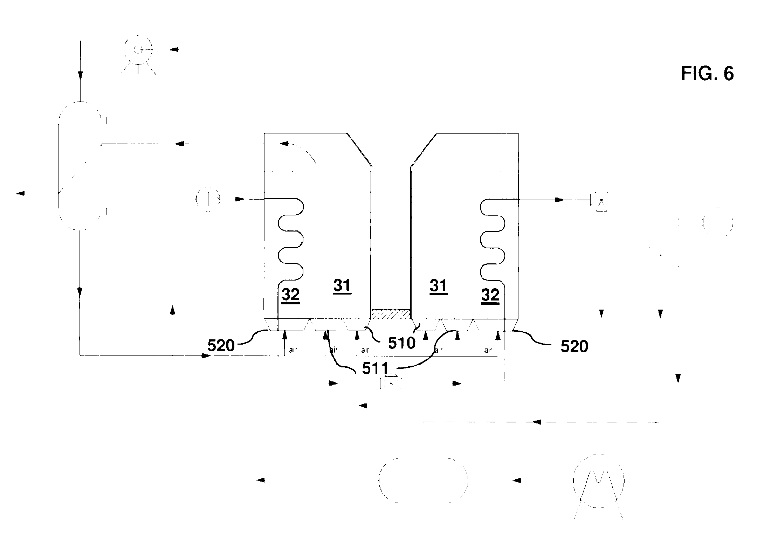

A variant embodiment is schematically shown in Figure 6. In said variant, which may be associated with each of the other embodiments described above, the air feeding inlets, or air boxes, are further subdivided into three sections, respectively denoted by 510, 511 and 520. In particular, air feeding to the storage portion 31 of the bed of particles is subdivided precisely through two inlets 510 and 511, so that the bed portion 31 nearer to the cavity 20 may be fluidized at greater speed than the storage bed portion 31 farther from the same cavity, i.e. near to the transfer portion 32. Therefore, the storage portion 31 is in turn subdivided, i.e. selectively fluidizable, in the zone near to the wall of the receiving cavity and in the zone farthest therefrom.

The advantages of this further subdivision lie in the possibility of increasing the speed of fluidization air for the zone near to the cavity, accordingly increasing the exchange coefficient between wall and adjacent bed portion. Thus, are minimized the energy consumptions that would be due to fluidization in case of equal high speed of all the storage portion. Moreover, it is reduced the loss of sensible heat carried by the reduced fluidization air flow rate of the first portion of the storage bed.

It will be understood that, in all of the above-described embodiments and variants, the different parts of working fluid circuit are apt to be selectively set in communication and/or to be activated independently the one of the other.

Moreover, it will be understood that in each of said embodiments and variants the receiving cavity and its various parts, in particular the inlet, may have shapes and configurations different from the above-considered ones; in addition, it is possible to provide plural receiving cavities immersed in the bed 3 of particles.

For each of the configurations described, for the cylindrical cavity 20 a closing device, not illustrated can be provided, which in the presence of bad weather and/or in the temporary or prolonged absence of insolation avoids heat dispersions from the device to the external environment. Such closing device is advantageous during night hours, when heat exchange occurs between the storage bed and the exchange one in favor of the heat exchanging elements internal to the casing.

As mentioned in the introduction, on the basis of a preferred variant embodiment the plant configuration provides a specialization of groups of devices into different thermal categories or typologies, each suitable to carry out a determined thermodynamic step for the working fluid.

Particularly preferred in case of use of water as working fluid is the specialization of the devices into two thermal categories. In particular, a first typology provides a low-temperature solar generation unit, UGS-L, transforming water into saturated steam, whereas a second typology provides a high-temperature solar generation unit, UGS-H. The latter receives, in use, the saturated steam from UGS-L and returns superheated steam - or optionally re-superheated according to thermodynamic cycle demands - to be sent in turbine. Each unit may be formed by one or more devices for storage and transfer as described above, optionally connected in series or to form the unit itself, and in turn connected in series to the device(s) of the other unit.

Such specialization offers the possibility of lowering the thermal regimes of over 50% of the devices constituting the generation plant, with a remarkable reduction of losses by irradiation and convection from such devices and saving on costs of construction materials, causing an increase in the overall efficiency of the generation plant.

Such configuration providing the use of devices according to the above-mentioned thermal categories is particularly suitable for high-power generation.

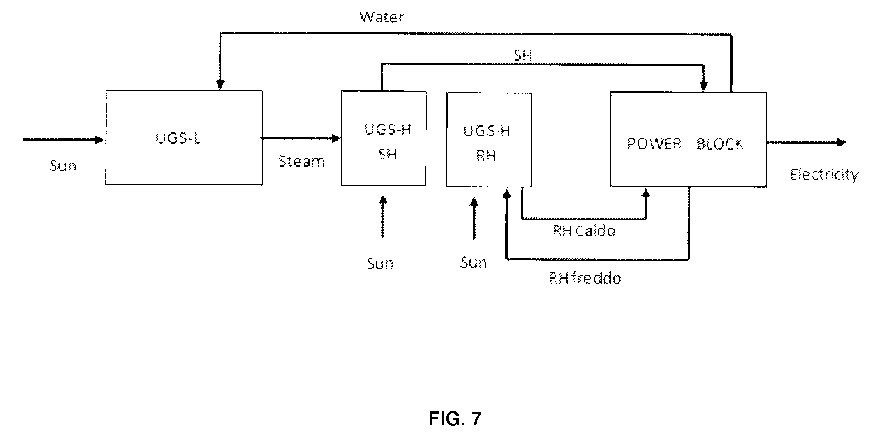

Referring to Figure 7, a connection diagram among specialized UGS is illustrated, in which for simplicity's sake only single UGS units inserted in a plant for the production of electric energy are illustrated. In said figure, by "Power Block" it is preferably meant the set of some of the plant components already described in the foregoing with reference to Figure 2, preferably steam turbine 81, generator 82, supply pump 86, pre-heaters (not illustrated), getter 85 and condenser 84.

The UGS-L receives the solar radiation and transfers thermal energy to the working fluid in the preferred and already described ways and methods. The saturated steam output of UGS-L ("steam") represents the input of UGS-H (SH), which in turn receives the solar radiation and transfers it to the working fluid (saturated steam) in the ways and methods already described.

The output of UGS-H is superheated steam (SH) which is sent to the Power-Block.

As said, related to the demands of the thermal cycle, the production of re-superheated steam is also possible; this case is illustrated in Figure 7 by a second unit, UGS-H (RH), having the same thermal features of the UGS-H (SH) which receives solar irradiation and cold re-superheated steam as input from the Power Block and returns it to the Power Block in the form of hot re-superheated steam. By way of example, the temperature of the cold re-superheated steam is of 300°C, whereas the temperature of the hot re-superheated steam coming from the UGS-H (RH) is of 500°C.

The connections in Figure 7, indicated as cold RH and hot RH, are then respectively steam collected by the medium-temperature turbine and steam produced by the UGS-H (RH) at a temperature suitable to the thermal cycle, preferably at the maximum temperature of the steam turbine.

The thermal cycle diagrams are known to a person skilled in the art and therefore are not further illustrated herein.

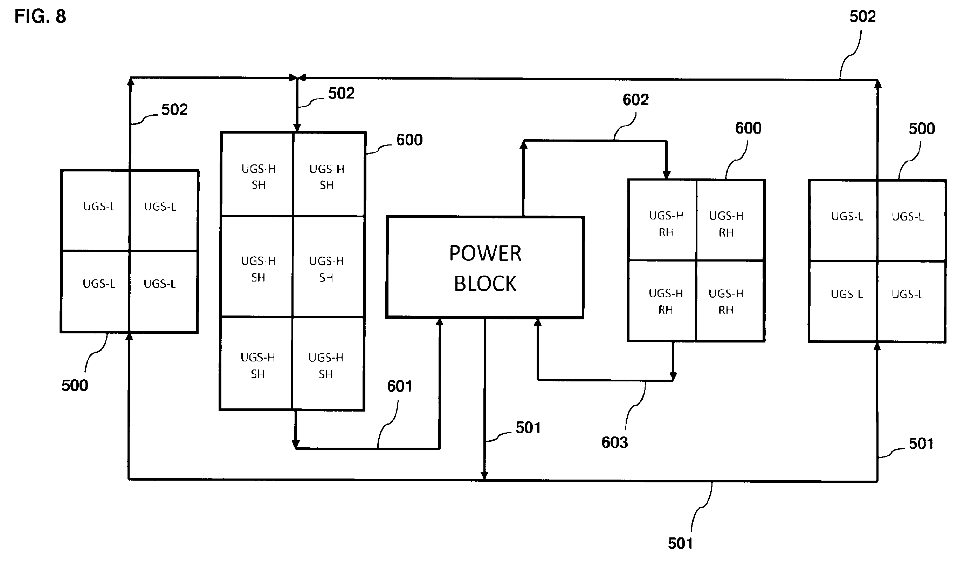

From said simplified diagram illustrated in Figure 7, Figure 8 shows a diagram of a power generation plant with numerous specialized high- and low-temperature UGS units.

In Figure 8 it is schematized the basic concept already illustrated by Figure 7, of connection in thermal series between low- and high-temperature solar generation units.

In particular, Figure 8 highlights UGS-L 500 groups and UGS-H 600 groups, each formed by units of the same thermal category set in parallel thereamong. The UGS-L 500 and UGS-H 600 groups are arranged, in general, in thermal series.

In more detail, the UGS-H groups are subdivided into UGS-H (SH), dedicated to superheated steam production, and UGS-H (RH), dedicated to re-superheated steam production. The UGS-L of the low-temperature group 500 receive, by a collecting circuit 501, the pre-heated water coming from the thermal cycle denoted in Figure by "Power Block". The output of each UGS-L is conveyed and distributed by a distribution circuit 502 to each UGS-H (SH) of the group 600 of high-temperature units.

The output of UGS-H (SH) in figure is schematized as circuit 601 of superheated steam sent to the Power Block. The schematization represents also the case of production of re-superheated steam as output of the UGS-H (RH). In that case, it is shown the circuit 602 of the cold re-superheated steam coming from the turbine and sent to each UGS-H (RH) and the circuit 603 of hot re-superheated steam sent to the turbine stage at maximum pressure and temperature.

The diagram of Figure 8 shows also a preferred arrangement of the UGSs with respect to the Power Block, such as to install the units with a high thermal regime, the UGS-H, near to the Power Block so as to reduce to a minimum the surface and therefore the thermal dispersions of the working fluid distribution ducts, though insulated.

Finally, in another preferred variant embodiment, the working fluid circulating in the internal and/or exposed heat exchanging elements may be air instead of water/steam. In that case, the components of the working fluid circuit are appropriate, e.g., to the running of a Brayton-Joule cycle. In said cycle, air is compressed and subsequently pre-heated by the device for storage and transfer of the invention before being expanded in a gas turbine. To increase system efficiency before in-turbine expansion, it is preferable to further raise the heat content of air by combustion of gas fuel in the same combustor of the gas turbine.

The present invention has been hereto described with reference to preferred embodiments thereof. It is understood that other embodiments might exist, all falling within the concept of the same invention, as defined by the protective scope of the claims hereinafter.

## Claims

1. A device (1; 10; 11; 12) for storage and transfer of thermal energy associated with an incident solar radiation, which device (1) is apt to be used in a solar plant for the production of energy based upon a "beam down" configuration, wherein it is irradiated from above by solar radiation, which device (1) compnses:
- a containment casing (2), and
- a solid storage means consisting of at least one bed (3) of fluidizable particles received inside said casing (2), which bed of particles is adapted to be fluidized in use by a fluidisation gas,
**characterized in that** said casing (2) has at least one receiving cavity (20) which extends through said bed (3) of particles and has a first open longitudinal end (21) defining an inlet mouth for the incident solar radiation and a second closed longitudinal end (22), opposite to said first open end (21) and defining a bottom of the cavity, a side skirt (23) of the cavity being defined between said ends,
the overall arrangement being such that said bed (3) of particles is arranged circumscribed to said side skirt (23) of said cavity (20) and is apt to be moved by said fluidization gas for storing thermal energy received from the solar radiation through said side skirt (23),
wherein said second longitudinal end (22) of said cavity (20) is arranged at a base of said bed (3) of particles.

2. The device (1) according to claim 1, wherein said cavity (20) has a substantially elongated, preferably substantially cylindrical geometry.

3. The device (1) according to claim 1 or 2. wherein said cavity (20) has a longitudinal axis (/), the overall configuration being such that said longitudinal axis (/) is arranged, in use, in a substantially vertical direction.

4. The device (1) according to any one of the preceding claims, wherein said side skirt (23) of said cavity (20) has an external surface of a metallic material and/or of a ceramic material.

5. The device (1) according to any one of the preceding claims, wherein said side skirt (23) is absorbing the solar radiation.

6. The device (1) according to any one of the preceding claims, wherein said bottom (22) of said cavity (20) is reflecting the solar radiation.

7. The device (1) according to any one of the preceding claims, wherein said cavity (20) has a transversal dimension, preferably a diameter (d), and a height (h) orthogonal to said transversal dimension in a ratio comprised in a range of about 0.2-0.5.

8. The device (1) according to any one of the preceding claims, wherein said bed (3) of particles in turn is formed by:
- a first storage portion (31), apt to store thermal energy received from the solar radiation and arranged at said side skirt (23) of said cavity (20); and
- a second transfer portion (32), arranged adjacently to said first portion (31), peripherally with respect to said cavity (20), and apt to transfer thermal energy stored by the latter to heat exchanging means (41) arranged within said casing (2),
wherein said first storage portion (31) and said second transfer portion (32) are selectively and Independently fluidizable to carry out a step of storing thermal energy and a step of transferring said stored energy, respectively.

9. The device (1) according to the preceding claim, wherein said first storage portion (31) is subdivided into at least two further portions, of which one adjacent to the side skirt of said cavity and one more remote from the latter side skirt, which two further portions are selectively and independently fluidizable to increase the heat exchange with said cavity.

10. The device (1) according to any one of the preceding claims, comprising means apt to selectively vary the fluidization gas speed and/or flow rate

11. The device (1) according to any one of the preceding claims, comprising a gas/gas, preferably air/air heat exchanger (71), wherein the overall arrangement is such that, in use, in said exchanger (71) are fed a first cold gas, which is the fluidization gas to be used for fluidization of said bed (3) of particles, and a second hot gas, which is the fluidization gas outlet from said bed (3) of particles.

12. The device (1) according to any one of the preceding claims, comprising heat exchanging means (41, 42), preferably one or more pipe bundles, crossed, in use, by a working fluid.

13. The device (1) according to the preceding claim, comprising first heat exchanging means (41) crossed, in use, by a working fluid and arranged within said casing (2) so as to be immersed in, or touched by, said bed (3) of fluidizable particles preferably said second transfer portion (32) of the latter.

14. The device (10) according to claim 12 or 13, comprising second heat exchanging means (42) crossed, in use, by a working fluid and arranged externally to said casing (2) so as to be irradiated by an incident solar radiation.

15. The device (10) according to the preceding claim, wherein the overall configuration is such that said second heat exchanging means (42) is arranged, in use, at a top (25) of said casing (2), preferably at said inlet (21).

16. The device (10) according to the preceding claim, wherein said inlet (21) of said cavity (20) is defined by right-angle surfaces

17. The device (11) according to claim 15, wherein said cavity inlet (210) is defined by a frustoconical surface.

18. The device (1) according to any one of the preceding claims, comprising a first heat exchanging circuit partially arranged within said casing (2) so as to enable a heat exchange with said bed (3) of particles, preferably said second portion (32) thereof.

19. The device (10) according to any one of the preceding claims, comprising a second heat exchanging circuit arranged outside said casing (2) so as to enable a direct heat exchange with an incident solar radiation.

20. The device (12) according to the preceding claim, wherein said second circuit is partitioned into different sectors to allow a preheating and an evaporation of the working fluid.

21. The device (10) according to claim 18 and according to claim 19 or 2D, wherein said first and second circuit arc in communication the one with the other one, are apt to be selectively set in communication or are completely independent and/or activatable independently the one of the other.

22. The device (1) according to any one of the preceding claims, comprising means for feeding a fuel, preferably gaseous within said bed (3) of particles or within part thereof.

23. The device (1) according tu any one of the preceding claims, which is suitable to be connected in thermal series with devices at different temperature regime, arranged among them so as to assume increasing temperatures with respect to the sense of crossing of the working fluid,

24. The device (1) according to any one of the preceding clams, wherein the overall arrangement is such that said bed (3) of particles is arranged in contact with said side skirt (23) of said cavity (20).

25. An energy production plant (100), comprising one or more devices (1) according to any one of the preceding claims and solar radiation captation means (200, 300; 210) which defines jointly to said device(s) (1), an irradiation configuration which makes solar radiation converge from above

26. The plant (100) according to the preceding claim, wherein said solar radiation captation means comprises primary captation means (200), preferably a field of heliostats, directly concerned by the solar radiation and secondary captation means (300), preferably a reflector, apt to receive the solar radiation from said primary means and convey it at said cavity (20) of said device(s) (1).

27. The plant (100) according to claim 25 or 26, wherein the overall configuration is such that the solar radiation is conveyed within said cavity (20) at the exposed surface of said bed (3) of particles.

28. The plant (100) according to any one of the claims 25 to 27 when dependent from said 18 and 19. wherein the overall configuration is such as to allow a production of steam or thermal energy at said first heat exchanging circuit and optionally also of said second heat exchanging circuit, and wherein preferably said first and second heat exchanging circuit are activatable independently the one of the other

29. The plant (100) according to any one of the claims 25 to 28 when dependent from said 18 and 19, wherein the overall configuration is such as to allow a generation of steam or heat for electric energy production at said first heat exchanging circuit and the generation of thermal energy for one or more heat consumptions (90) at said second heat exchanging circuit.

30. The plant (100) according to any one of the claims 25 to 29, providing a production of steam and/or a production of heat for connected heat consumptions, preferably for a salt removing system.

31. The plant (100) according to any one of the claims 25 to 30. providing a production of steam and/or a production of electric energy, comprising two or more devices (1) connected in thermal series.

32. The plant (100) according to the preceding claim, comprising one or a first group of devices (UGS-L) configured so as to transform working water into saturated steam, and one or a second group of devices (UGS-H) configured so as to transform said saturated steam into superheated steam or even into re-superheated steam.

33. A method for production of energy from a solar radiation, providing the use of a plant (100) according to any one of the claims 25 to 32

34. The method according to the preceding claim, providing a solar irradiation coming from above by positioning primary captation means (210) on natural or artificial slopes.

35. The method according to claim 33 or 34, providing a concomitant production of electric energy and thermal energy, the latter preferable for the production of desalinated water.

36. The method according to any one of the claims 33 to 35, comprising a device (1) according to claim 9, which method comprises:
- a step of storing thermal energy received from the solar radiation concentrated by said first portion (31) of bed (3) of particles; and
- a step of transferring the thermal energy stored in said storing step to heat exchanging means (41) crossed by a working fluid, carried out by fluidization of said second portion (32) of bed,
wherein said heat storing and transferring steps are activated the one independently of the other, preferably one in the daytime and the other one in the daytime and in the nighttime

37. The method according to any one of the claims 33 to 36, wherein said fluidization gas is air.

38. The method according to any one of the claims 33 to 37, wherein a selective variation of the fluidization gas speed and/or flow rate is provided.

39. The method according to any one of the claims 33 to 38, comprising a device according to claim 18 and 19. wherein said second heat exchanging circuit is activated in the daytime and said first heat exchanging circuit is activated in the nighttime.

40. The method according to any one of the claims 33 to 39, which uses water or air as working fluid.

41. The method according to any one of the claims 33 to 40, providing the use of one or a first group of devices (UGS-L) configured so as to transform working water In saturated steam, and one or a second group of devices (UGS-H) configured so as to transform such saturated steam into superheated steam or even into resuperheated steam.

## Patentansprüche

1. Vorrichtung (1; 10; 11; 12) zur Speicherung und Übertragung von Wärmeenergie, die mit einer einfallenden Sonnenstrahlung verknüpft ist, wobei die Vorrichtung (1) geeignet ist, für die Produktion von Energie, basierend auf einer "Beam-down"-Konfiguration, in einer Solaranlage verwendet zu werden, wobei sie von oben durch Sonnenstrahlung bestrahlt wird, wobei die Vorrichtung umfasst:
- ein Einschlussgehäuse (2); und
- ein festes Speichermittel, das aus mindestens einem Bett (3) aus fluidisierbaren Partikeln, die im Inneren des Gehäuses (2) aufgenommen werden, besteht, wobei das Bett aus Partikeln geeignet ist, unter Betriebsbedingungen, durch ein Fluidisierungsgas fluidisiert zu werden,
**dadurch gekennzeichnet, dass** das Gehäuse (2) über mindestens einen Aufnahmehohlraum (20) verfügt, der sich durch das Bett (3) aus Partikeln erstreckt und über ein erstes offenes longitudinales Ende (21) verfügt, das einen Einlassmund für die einfallende Sonnenstrahlung definiert, und über ein zweites geschlossenes longitudinales Ende (22), gegenüber dem ersten offenen Ende (21) angeordnet, verfügt und einen Boden des Hohlraums definiert, wobei zwischen den Enden eine Randabdichtung (23) des Hohlraumes definiert wird,
wobei die Gesamtanordnung so ist, dass das Bett (3) aus Partikeln durch die Randabdichtung (23) des Hohlraums (20) begrenzt wird und geeignet ist, zur Speicherung von Wärmeenergie, die von der Sonnenstrahlung durch die Randabdichtung (23) empfangen wird, durch das Fluidisierungsgas bewegt zu werden,
wobei das zweite longitudinale Ende (22) des Hohlraums (20) bei einer Basis des Betts (3) aus Partikeln angeordnet ist.

2. Vorrichtung (1) gemäß Anspruch 1, wobei der Hohlraum (20) über eine im Wesentlichen längliche, vorzugsweise im Wesentlichen zylindrische Geometrie verfügt.

3. Vorrichtung (1) gemäß Anspruch 1 oder 2, wobei der Hohlraum (20) über eine Längsachse (/) verfügt, wobei die Gesamtkonfiguration so ist, dass die Längsachse (/), unter Betriebsbedingungen, in eine im Wesentlichen vertikalen Richtung angeordnet ist.

4. Vorrichtung (1) gemäß einem der vorangehenden Ansprüche, wobei die Randabdichtung (23) des Hohlraums (20) über eine äußere Oberfläche aus einem metallischen Material und/oder einem keramischen Material verfügt.

5. Vorrichtung (1) gemäß einem der vorangehenden Ansprüche, wobei die Randabdichtung (23) die Sonnenstrahlung absorbiert.

6. Vorrichtung (1) gemäß einem der vorangehenden Ansprüche, wobei der Boden (22) des Hohlraums (20) die Sonnenstrahlung reflektiert.

7. Vorrichtung (1) gemäß einem der vorangehenden Ansprüche, wobei der Hohlraum (20) umfasst: eine transversale Dimension, vorzugsweise einen Durchmesser (d), und eine Höhe (*h*), orthogonal zu der transversalen Dimension in einem Verhältnis, das einen Bereich von ungefähr 0,2 - 0,5 umfasst.

8. Vorrichtung (1) gemäß einem der vorangehenden Ansprüche, wobei das Bett (3) aus Partikeln seinerseits durch die folgenden Teile gebildet wird:
- einen ersten Speicherteil (31), der geeignet ist Wärmeenergie zu speichern, die von der Sonnenstrahlung empfangen wird, und bei der Randabdichtung (23) des Hohlraums (20) angeordnet ist; und
- einen zweiten Übertragungsteil (32), der an den ersten Teil (31) angrenzend angeordnet ist, bezüglich des Hohlraums (20) peripher, und geeignet ist Wärmeenergie zu übertragen, die durch letzteren gespeichert wird, um das Wechselmittel (41) zu erwärmen, das innerhalb des Gehäuses (2) angeordnet ist,
wobei der erste Speicherteil (31) und der zweite Übertragungsteil (32) selektiv und unabhängig fluidisierbar sind, um einen Schritt zur Speicherung von Wärmeenergie beziehungsweise einen Schritt zur Übertragung der gespeicherten Energie auszuführen.

9. Vorrichtung (1) gemäß dem vorangehenden Anspruch, wobei der erste Speicherteil (31) in mindestens zwei weitere Teile unterteilt ist, von denen einer angrenzend an die Randabdichtung des Hohlraums und einer weiter von der letzteren Randabdichtung entfernt angeordnet ist, wobei diese zwei weiteren Teile selektiv und unabhängig fluidisierbar sind, um den Wärmeaustausch mit dem Hohlraum zu erhöhen.

10. Vorrichtung (1) gemäß einem der vorangehenden Ansprüche, die ein Mittel umfasst, das geeignet ist die Fluidisierungsgasgeschwindigkeit und/oder -flussrate selektiv zu variieren.

11. Vorrichtung (1) gemäß einem der vorangehenden Ansprüche, die einen Gas/Gas-, vorzugsweise Luft/Luft-Wärmetauscher (71), umfasst, wobei die Gesamtanordnung so ist, dass, unter Betriebsbedingungen, der erste Tauscher (71) mit einem ersten kalten Gas befüllt wird, das das Fluidisierungsgas ist, das zur Fluidisierung des Betts (3) aus Partikeln verwendet wird, und mit einem zweiten heißen Gas befüllt wird, das das Fluidisierungsgas ist, das von dem Bett (3) aus Partikeln ausgelassen wird.

12. Vorrichtung (1) gemäß einem der vorangehenden Ansprüche, die Wärmetauschmittel (41, 42) umfasst, vorzugsweise ein oder mehrere Rohrbündel, durch die, unter Betriebsbedingungen, ein Arbeitsmedium geführt wird.

13. Vorrichtung (1) gemäß dem vorangehenden Anspruch, die ein erstes Wärmetauschmittel (41) umfasst, in dem, unter Betriebsbedingungen, ein Arbeitsmedium geführt wird und das innerhalb des Gehäuses (2) angeordnet ist, so dass es in das Bett (3) aus fluidisierbaren Partikeln, vorzugsweise den zweiten Übertragungsteil (32) des letzteren, eintaucht oder davon berührt wird.

14. Vorrichtung (10) gemäß Anspruch 12 oder 13, die ein zweites Wärmetauschmittel (42) umfasst, in dem, unter Betriebsbedingungen, ein Arbeitsmedium geführt wird und das außerhalb des Gehäuses (2) angeordnet ist, um so durch eine einfallende Sonnenstrahlung bestrahlt zu werden.

15. Vorrichtung (10) gemäß dem vorangehenden Anspruch, wobei die Gesamtkonfiguration so ist, dass das zweite Wärmetauschmittel (42), unter Betriebsbedingungen, obenan (25) auf dem Gehäuse (2), vorzugsweise bei dem Einlass (21), angeordnet ist.

16. Vorrichtung (10) gemäß dem vorangehenden Anspruch, wobei der Einlass (21) des Hohlraums (20) durch rechtwinklige Oberflächen definiert wird.

17. Vorrichtung (11) gemäß Anspruch 15, wobei der Hohlraumeinlass (210) durch eine frustokonische Oberfläche definiert wird.

18. Vorrichtung (1) gemäß einem der vorangehenden Ansprüche, die einen ersten Wärmetauschkreislauf umfasst, der zum Teil innerhalb des Gehäuses (2) angeordnet ist, um so einen Wärmeaustausch mit dem Bett (3) aus Partikeln, vorzugsweise dem zweiten Teil (32) davon, zu ermöglichen.

19. Vorrichtung (10) gemäß einem der vorangehenden Ansprüche, die einen zweiten Wärmetauschkreislauf umfasst, der außerhalb des Gehäuses (2) angeordnet ist, um so einen direkten Wärmeaustausch mit einer einfallenden Sonnenstrahlung zu ermöglichen.

20. Vorrichtung (12) gemäß dem vorangehenden Anspruch, wobei der zweite Kreislauf in unterschiedliche Abschnitte unterteilt ist, um eine Vorwärmung und eine Verdunstung des Arbeitsmediums zu ermöglichen.

21. Vorrichtung (10) gemäß Anspruch 18 und gemäß Anspruch 19 oder 20, wobei der erste und der zweite Kreislauf miteinander kommunizieren, geeignet sind selektiv in Kommunikation gesetzt zu werden, oder vollständig unabhängig sind und/oder unabhängig voneinander aktiviert werden können.

22. Vorrichtung (1) gemäß einem der vorangehenden Ansprüche, die Mittel zum Einführen eines Kraftstoffs, vorzugsweise eines gasförmigen, in das Bett (3) aus Partikeln, oder in Teilen davon, umfasst.

23. Vorrichtung (1) gemäß einem der vorangehenden Ansprüche, die geeignet ist mit Vorrichtungen bei unterschiedlichen Temperatur-Regimen thermisch in Reihe geschaltet zu werden, so unter diesen angeordnet, dass eine zunehmende Temperatur bezüglich des Sinns einer Führung des Arbeitsmediums angenommen werden kann.

24. Vorrichtung (1) gemäß einem der vorangehenden Ansprüche, wobei die Gesamtanordnung so ist, dass das Bett (3) aus Partikeln in Kontakt mit der Randabdichtung (23) des Hohlraums (20) angeordnet ist.

25. Energieerzeugungsanlage (100), die umfasst: eine oder mehrere Vorrichtungen (1) gemäß einem der vorangehenden Ansprüche und Sonnenstrahlungserfassungsmittel (200, 300; 210), die, zusammen mit der (den) Vorrichtung(en) (1) eine Bestrahlungskonfiguration definieren, die die Sonnenstrahlung von oben zusammenlaufen lässt.

26. Anlage (100) gemäß dem vorangehenden Anspruch, wobei das Sonnenstrahlungserfassungsmittel umfasst: ein primäres Erfassungsmittel (200), vorzugsweise ein Feld von Heliostaten, die direkt durch die Sonnenstrahlung betroffen werden, und ein sekundäres Erfassungsmittel (300), vorzugsweise einen Reflektor, der geeignet ist die Sonnenstrahlung von dem ersten Mittel zu empfangen und sie in dem Hohlraum (20) der Vorrichtung(en) (1) zu vermitteln.

27. Anlage (100) gemäß Anspruch 25 oder 26, wobei die Gesamtkonfiguration so ist, dass die Sonnenstrahlung innerhalb des Hohlraums (20) bei der exponierten Oberfläche des Betts (3) aus Partikeln vermittelt wird.

28. Anlage (100) gemäß einem der Ansprüche 25 bis 27, wenn abhängig von den Ansprüchen 18 und 19, wobei die Gesamtkonfiguration so ist, dass eine Produktion von Dampf oder thermischer Energie bei dem ersten Wärmetauschkreislauf und optional außerdem dem zweiten Wärmetauschkreislauf ermöglicht wird, und wobei vorzugsweise der erste und zweite Wärmetauschkreislauf unabhängig voneinander aktivierbar sind.

29. Anlage (100) gemäß einem der Ansprüche 25 bis 28, wenn abhängig von den Ansprüchen 18 und 19, wobei die Gesamtkonfiguration so ist, dass eine Erzeugung von Dampf oder Wärme zur Produktion von elektrischer Energie bei dem ersten Wärmetauschkreislauf und die Erzeugung von thermischer Energie für einen oder mehrere Wärmeverbräuche (90) bei dem zweiten Wärmetauschkreislauf ermöglicht wird.

30. Anlage (100) gemäß einem der Ansprüche 25 bis 29, die eine Produktion von Dampf und/oder eine Produktion von Wärme für verbundene Wärmeverbräuche, vorzugsweise für ein System zur Entfernung von Salz, zur Verfügung stellt.

31. Anlage (100) gemäß einem der Ansprüche 25 bis 30, die eine Produktion von Dampf und/oder eine Produktion von elektrischer Energie zur Verfügung stellt, die zwei oder mehr Vorrichtungen (1) umfasst, die thermisch in Reihe geschaltet sind.

32. Anlage (100) gemäß dem vorangehenden Anspruch, die umfasst: eine oder eine erste Gruppe von Vorrichtungen (UGS-L), die geeignet sind Arbeitswasser in gesättigten Dampf umzuwandeln, und eine oder eine zweite Gruppe von Vorrichtungen (UGS-H), die geeignet sind den gesättigten Dampf in überhitzten Dampf oder sogar neu überhitzten Dampf umzuwandeln.

33. Verfahren zur Produktion von Energie aus einer Sonnenstrahlung, das die Verwendung einer Anlage (100) gemäß einem der Ansprüche 25 bis 32 zur Verfügung stellt.

34. Verfahren gemäß dem vorangehenden Anspruch, das eine von oben einfallende Sonnenbestrahlung durch eine Positionierung eines primären Erfassungsmittels (210) auf natürliche oder künstliche Hänge zur Verfügung stellt.

35. Verfahren gemäß Anspruch 33 oder 34, das eine gleichzeitige Produktion von elektrischer Energie und thermischer Energie zur Verfügung stellt, die letztere vorzugsweise zur Produktion von destilliertem Wasser.

36. Verfahren gemäß einem der Ansprüche 33 bis 35, das eine Vorrichtung (1) gemäß Anspruch 9 umfasst, wobei das Verfahren umfasst:
- einen Schritt zur Speicherung von thermischer Energie, die aus der Sonnenstrahlung empfangen wird, die durch den ersten Teil (31) des Betts (3) aus Partikeln konzentriert wird; und
- einen Schritt zur Übertragung der thermischen Energie, die in dem Speicherschritt gespeichert wird, an das Wärmetauschmittel (41), in dem ein Arbeitsmedium geführt wird, ausgeführt durch eine Fluidisierung des zweiten Teils (32) des Betts,
wobei der Wärmespeicherschritt und der Übertragungsschritt unabhängig voneinander aktiviert werden, vorzugsweise einer am Tage und der andere am Tage und in der Nacht.

37. Verfahren gemäß einem der Ansprüche 33 bis 36, wobei das Fluidisierungsgas Luft ist.

38. Verfahren gemäß einem der Ansprüche 33 bis 37, wobei eine selektive Variation der Fluidisierungsgasgeschwindigkeit und/oder -flussrate zur Verfügung gestellt wird.

39. Verfahren gemäß einem der Ansprüche 33 bis 38, das eine Vorrichtung gemäß Anspruch 18 und 19 umfasst, wobei der zweite Wärmetauschkreislauf am Tage aktiviert wird und der erste Wärmetauschkreislauf in der Nacht aktiviert wird.

40. Verfahren gemäß einem der Ansprüche 33 bis 39, das Wasser oder Luft als Arbeitsmedium verwendet.

41. Verfahren gemäß einem der Ansprüche 33 bis 40, das umfasst: Verwendung einer oder einer ersten Gruppe von Vorrichtungen (UGS-L), die geeignet sind Arbeitswasser in gesättigten Dampf umzuwandeln, und einer oder einer zweiten Gruppe von Vorrichtungen (UGS-H), die geeignet sind solchen gesättigten Dampf in überhitzten Dampf oder sogar neu überhitzten Dampf umzuwandeln.

## Revendications

1. Dispositif (1 ; 10 ; 11 ; 12) pour le stockage et le transfert d'énergie thermique associée à un rayonnement solaire incident, lequel dispositif (1) est apte à être utilisé dans une installation solaire pour la production d'énergie basée sur une configuration à « faisceau descendant », dans lequel il est irradié de dessus par le rayonnement solaire, lequel dispositif (1) comprend :
- une enveloppe de confinement (2) ; et
- un moyen de stockage solide se composant d'au moins un lit (3) de particules pouvant être fluidisées reçues à l'intérieur de ladite enveloppe (2), lequel lit de particules est adapté pour être fluidisé à l'usage par un gaz de fluidisation,
**caractérisé en ce que** ladite enveloppe (2) a au moins une cavité de réception (20) qui s'étend à travers ledit lit (3) de particules et a une première extrémité longitudinale ouverte (21) définissant une bouche d'entrée pour le rayonnement solaire incident et une seconde extrémité longitudinale fermée (22) opposée à ladite première extrémité ouverte (21) et définissant un fond de la cavité, une jupe latérale (23) de la cavité étant définie entre lesdites extrémités,
l'agencement global étant tel que ledit lit (3) de particules est agencé en étant limité à ladite jupe latérale (23) de ladite cavité (20) et est apte à être déplacé par ledit gaz de fluidisation pour stocker l'énergie thermique reçue du rayonnement solaire par ladite jupe latérale (23),
dans lequel ladite seconde extrémité longitudinale (22) de ladite cavité (20) est agencée à une base dudit lit (3) de particules.

2. Dispositif (1) selon la revendication 1, dans lequel ladite cavité (20) a une géométrie allongée, de préférence sensiblement cylindrique.

3. Dispositif (1) selon la revendication 1 ou 2, dans lequel ladite cavité (20) a un axe longitudinal (I), la configuration globale étant telle que ledit axe longitudinal (I) est agencé, à l'usage, dans une direction sensiblement verticale.

4. Dispositif (1) selon l'une quelconque des revendications précédentes, dans lequel ladite jupe latérale (23) de ladite cavité (20) a une surface externe d'un matériau métallique et/ou d'un matériau en céramique.

5. Dispositif (1) selon l'une quelconque des revendications précédentes, dans lequel ladite jupe latérale (23) absorbe le rayonnement solaire.

6. Dispositif (1) selon l'une quelconque des revendications précédentes, dans lequel ledit fond (22) de ladite cavité (20) renvoie le rayonnement solaire.

7. Dispositif (1) selon l'une quelconque des revendications précédentes, dans lequel ladite cavité (20) a une dimension transversale, de préférence un diamètre (d), et une hauteur (h) orthogonale à ladite dimension transversale dans un rapport compris dans une plage d'environ 0,2-0,5.

8. Dispositif (1) selon l'une quelconque des revendications précédentes, dans lequel ledit lit (3) de particules est formé à son tour par :
- une première partie de stockage (31) apte à stocker l'énergie thermique reçue du rayonnement solaire et agencée au niveau de ladite jupe latérale (23) de ladite cavité (20) ; et
- une seconde partie de transfert (32) agencée de manière adjacente à ladite première partie (31) de manière périphérique par rapport à ladite cavité (20) et apte à transférer l'énergie thermique stockée par cette dernière au moyen d'échange thermique (41) agencé à l'intérieur de ladite enveloppe (2),
dans lequel ladite première partie de stockage (31) et ladite seconde partie de transfert (32) sont sélectivement et indépendamment fluidisables pour réaliser une étape consistant à stocker l'énergie thermique et une étape consistant à transférer ladite énergie thermique, respectivement.

9. Dispositif (1) selon l'une quelconque des revendications précédentes, dans lequel ladite première partie de stockage (31) est divisée en au moins deux autres parties, dont l'une est adjacente à la jupe latérale de ladite cavité et une plus à distance de cette dernière jupe latérale, lesquelles deux autres parties sont sélectivement et indépendamment fluidisables pour augmenter l'échange thermique avec ladite cavité.

10. Dispositif (1) selon l'une quelconque des revendications précédentes, comprenant des moyens aptes à modifier sélectivement la vitesse et/ou le débit du gaz de fluidisation.

11. Dispositif (1) selon l'une quelconque des revendications précédentes, comprenant un échangeur thermique gaz/gaz, de préférence air/air (71), dans lequel l'agencement global est tel que, à l'usage, dans ledit échangeur (71), sont alimentés un premier gaz froid qui est le gaz de fluidisation à utiliser pour la fluidisation dudit lit (3) de particules, et un second gaz chaud qui est le gaz de fluidisation en sortie dudit lit (3) de particules.

12. Dispositif (1) selon l'une quelconque des revendications précédentes, comprenant des moyens d'échange thermique (41, 42), de préférence un ou plusieurs paquets de tuyaux, traversés, à l'usage, par un fluide de travail.

13. Dispositif (1) selon l'une quelconque des revendications précédentes, comprenant des premiers moyens d'échange thermique (41) traversés, à l'usage, par un fluide de travail et agencés à l'intérieur de ladite enveloppe (2) afin d'être immergés ou en contact avec ledit lit (3) de particules fluidisables, de préférence ladite seconde partie de transfert (32) de ce dernier.

14. Dispositif (10) selon la revendication 12 ou 13, comprenant des seconds moyens d'échange thermique (42) traversés, à l'usage, par un fluide de travail et agencés à l'extérieur de ladite enveloppe (2) afin d'être irradié par un rayonnement solaire incident.

15. Dispositif (10) selon l'une quelconque des revendications précédentes, dans lequel la configuration globale est telle que lesdits seconds moyens d'échange thermique (42) sont agencés, à l'usage, sur une partie supérieure (25) de ladite enveloppe (2), de préférence au niveau de ladite entrée (21).

16. Dispositif (10) selon la revendication précédente, dans lequel ladite entrée (21) de ladite cavité (20) est définie par des surfaces en angle droit.

17. Dispositif (11) selon la revendication 15, dans lequel ladite entrée de cavité (210) est définie par une surface tronconique.

18. Dispositif (1) selon l'une quelconque des revendications précédentes, comprenant un premier circuit d'échange thermique partiellement agencé à l'intérieur de ladite enveloppe (2) afin de permettre un échange thermique avec ledit lit (3) de particules, de préférence ladite seconde partie (32) de ce dernier.

19. Dispositif (10) selon l'une quelconque des revendications précédentes, comprenant un second circuit d'échange thermique agencé à l'extérieur de ladite enveloppe (2) afin de permettre un échange thermique direct avec un rayonnement solaire incident.

20. Dispositif (12) selon la revendication précédente, dans lequel ledit second circuit est divisé en différents secteurs pour permettre un préchauffage et une évaporation du fluide de travail.

21. Dispositif (10) selon la revendication 18 et selon la revendication 19 ou 20, dans lequel lesdits premier et second circuits sont en communication l'un avec l'autre, sont aptes à être sélectivement placés en communication ou sont complètement indépendants et/ou indépendamment activables l'un de l'autre.

22. Dispositif (1) selon l'une quelconque des revendications précédentes, comprenant des moyens pour alimenter un combustible, de préférence gazeux, à l'intérieur dudit lit (3) de particules ou à l'intérieur d'une partie de ce dernier.

23. Dispositif (1) selon l'une quelconque des revendications précédentes, qui est approprié pour être raccordé thermiquement en série avec des dispositifs à différents régimes de température, agencé entre eux afin d'adopter une température croissante par rapport au sens de traversée du fluide de travail.

24. Dispositif (1) selon l'une quelconque des revendications précédentes, dans lequel l'agencement global est tel que ledit lit (3) de particules est agencé en contact avec ladite jupe latérale (23) de ladite cavité (20).

25. Installation de production d'énergie (100) comprenant un ou plusieurs dispositifs (1) selon l'une quelconque des revendications précédentes et des moyens de captation de rayonnement solaire (200, 300 ; 210) qui définissent, conjointement avec ledit (lesdits) dispositif(s) (1), une configuration de rayonnement qui fait converger le rayonnement solaire de dessus.

26. Installation (100) selon la revendication précédente, dans laquelle lesdits moyens de captation de rayonnement solaire comprennent des moyens de captation principaux (200), de préférence un champ d'héliostats, directement concernés par le rayonnement solaire et des moyens de captation secondaires (300), de préférence, un réflecteur, apte à recevoir le rayonnement solaire desdits moyens principaux et le transporter au niveau de ladite cavité (20) dudit (desdits) dispositif(s) (1).

27. Installation (100) selon la revendication 25 ou 26, dans laquelle la configuration globale est telle que le rayonnement solaire est transporté à l'intérieur de ladite cavité (20) au niveau de la surface exposée dudit lit (3) de particules.

28. Installation (100) selon l'une quelconque des revendications 25 à 27, lorsqu'elle dépend des revendications 18 et 19, dans laquelle la configuration globale est telle qu'elle permet une production de vapeur ou d'énergie thermique au niveau dudit premier circuit d'échange thermique et facultativement également dudit second circuit d'échange thermique et dans laquelle de préférence lesdits premier et second circuit d'échange thermique sont activables indépendamment l'un de l'autre.

29. Installation (100) selon l'une quelconque des revendications 25 à 28, lorsqu'elle dépend des revendications 18 et 19, dans laquelle la configuration globale est telle qu'elle permet une génération de vapeur ou de chaleur pour la production d'énergie électrique au niveau dudit premier circuit d'échange thermique et la génération d'énergie thermique pour une ou plusieurs consommations de chaleur (90) au niveau dudit second circuit d'échange thermique.

30. Installation (100) selon l'une quelconque des revendications 25 à 29, fournissant une production de vapeur et/ou une production de chaleur pour les consommations de chaleur raccordées, de préférence pour un système de retrait de sel.

31. Installation (100) selon l'une quelconque des revendications 25 à 30, fournissant une production de vapeur et/ou une production d'énergie électrique, comprenant deux dispositifs (1) ou plus raccordés thermiquement en série.

32. Installation (100) selon la revendication précédente, comprenant un dispositif ou un premier groupe de dispositifs (UGS-L) configuré afin de transformer l'eau de travail en vapeur saturée, et un dispositif ou un second groupe de dispositifs (UGS-H) configuré afin de transformer ladite vapeur saturée en vapeur surchauffée ou même en vapeur resurchauffée.

33. Procédé pour la production d'énergie à partir d'un rayonnement solaire, prévoyant l'utilisation d'une installation (100) selon l'une quelconque des revendications 25 à 32.

34. Procédé selon la revendication précédente, prévoyant un rayonnement solaire venant de dessus en positionnant les moyens de captation principaux (210) sur des pentes naturelles ou artificielles.

35. Procédé selon la revendication 33 ou 34, prévoyant une production concomitante d'énergie électrique et d'énergie thermique, cette dernière de préférence pour la production d'eau dessalée.

36. Procédé selon l'une quelconque des revendications 33 à 35, comprenant un dispositif (1) selon la revendication 9, lequel procédé comprend :
- une étape consistant à stocker l'énergie thermique reçue du rayonnement solaire concentré par ladite première partie (31) du lit (3) de particules ; et
- une étape consistant à transférer l'énergie thermique stockée à ladite étape de stockage aux moyens d'échange thermique (41) traversés par un fluide de travail, réalisée par la fluidisation de ladite seconde partie (32) de lit,
dans lequel lesdites étapes de stockage et de transfert de chaleur sont activées l'une indépendamment de l'autre, de préférence l'une pendant la journée et l'autre pendant la journée et la nuit.

37. Procédé selon l'une quelconque des revendications 33 à 36, dans lequel ledit gaz de fluidisation est de l'air.

38. Procédé selon l'une quelconque des revendications 33 à 37, dans lequel une variation sélective de la vitesse et/ou du débit du gaz de fluidisation est prévue.

39. Procédé selon l'une quelconque des revendications 33 à 38, comprenant un dispositif selon la revendication 18 et 19, dans lequel ledit second circuit d'échange thermique est activé la journée et ledit premier circuit d'échange thermique est activé la nuit.

40. Procédé selon l'une quelconque des revendications 33 à 39, qui utilise de l'eau ou de l'air en tant que fluide de travail.

41. Procédé selon l'une quelconque des revendications 33 à 40, prévoyant l'utilisation d'un dispositif ou d'un premier groupe de dispositifs (UGS-L) configuré afin de transformer l'eau de travail en vapeur saturée et un dispositif ou un second groupe de dispositifs (UGS-H) configuré afin de transformer une telle vapeur saturée en vapeur surchauffée ou même en vapeur resurchauffée.
